# FASCICULE DE BREVET EUROPEEN

(11) **EP 1 522 680 B1**
(45) Date de publication et mention de la délivrance du brevet: **09.04.2008**
(21) Numéro de dépôt: 04292285.6
(22) Date de dépôt: 23.09.2004
(51) Int. Cl.: F01D 9/06, F02K 1/30, F02K 1/80

(54) **Système de ventilation pour une tuyère d'éjection convergente divergente**
Kühlungssystem für eine konvergent-divergente Schubdüse
Cooling system for a convergent divergent nozzle

(30) Priorité: 24.09.2003 FR 0311187
(43) Date de publication de la demande: 13.04.2005
(73) Titulaire: SNECMA, 75015 Paris (FR)
(72) Inventeur: Curtelin, Raphael, 77720 Saint Mery (FR); Doussinault, Marc, 77350 Le Mee sur Seine (FR); Lapergue, Guy, 77950 Rubelles (FR); Durand, Didier, 77340 Pontault Combault (FR)
(74) Mandataire: Barbin le Bourhis, Joël

(56) Documents cités:
- EP-A- 0 541 346
- EP-A- 1 333 172
- US-A- 4 000 612
- US-A- 5 603 531
- US-A- 5 996 936
- US-A- 6 021 637

## Description

L'invention concerne un système de ventilation d'une tuyère convergente divergente équipant un turboréacteur à usage militaire.

Elle concerne plus précisément un turboréacteur à double flux comportant une chambre de post-combustion d'axe X délimitée par une paroi annulaire située radialement à l'intérieur d'un carter annulaire, ladite paroi annulaire et ledit carter définissant un passage annulaire dans lequel circule un flux d'air de refroidissement, une tuyère axisymétrique convergente divergente disposée en aval de ladite chambre de post-combustion et comportant une couronne de volets convergents articulés à l'extrémité aval dudit carter et une couronne de volets divergents articulés à l'extrémité aval desdits volets convergents, chaque couronne de volets comportant en alternance une pluralité de volets commandés et une pluralité de volets suiveurs, une couronne de volets froids disposés radialement à l'extérieur de ladite tuyère et articulés à leur extrémité amont sur une virole conique raccordée à la partie aval dudit carter, des moyens pour créer un film d'air de refroidissement sur les faces internes desdits volets convergents et des moyens de refroidissement desdits volets divergents.

US 5.435.127 concerne un turboréacteur du type mentionné ci-dessus dans lequel le refroidissement des volets divergents est réalisé par un mélange du flux d'air de nacelle avec un prélèvement d'air dans la partie aval du canal annulaire dans lequel circule le flux de refroidissement de la paroi annulaire.

EP 1 333 172 et EP 0 541 346 sont un exemple de l'état de la technique concernant le système de ventilation pour tuyères convergents-divergents.

Le prélèvement d'air est opéré directement par piquage sur le canal avec une vanne de réglage en sortie de piquage. En aval du coude de piquage est placée une trompe à jet qui réalise le mélange entre de l'air moteur à haute pression et l'air nacelle non pressurisé. La conformation exacte du prélèvement n'est pas indiquée dans ce document. Toutefois, le prélèvement direct sur le canal risque de ne pas être efficace pour prélever des quantités importantes de débit sur le flux de refroidissement, car il perturbe le fonctionnement de la ventilation. Il risque d'y avoir des réintroductions de gaz chauds sous la paroi annulaire et une mauvaise alimentation du film de refroidissement des volets convergents. Par ailleurs, il est difficile de loger un tel dispositif dans l'encombrement de la tuyère, car cet environnement est très occupé par les vérins de commande des volets et des leviers.

Le but de l'invention est d'alimenter efficacement et uniformément les volets divergents d'une tuyère convergente divergente refroidie avec un dispositif qui a un fort taux d'intégration avec les pièces existantes.

L'invention atteint son but par le fait que les moyens de refroidissement desdits volets divergents comportent :
une chambre de tranquillisation annulaire, délimitée en aval par ladite virole conique et alimentée en air de refroidissement par des perçages ménagés dans une paroi frontière entre ladite chambre de tranquillisation et l'extrémité aval dudit passage annulaire,
une pluralité d'alvéoles de distribution entourant la chambre de tranquillisation et raccordées à cette dernière, lesdites alvéoles étant délimitées en aval par ladite virole conique et étant disposées autour de l'axe X dans les plans de symétrie des volets suiveurs, et
des canalisations télescopiques raccordant chacune une alvéole au volet divergent suiveur situé dans le même plan de symétrie que ladite alvéole.

Ainsi la structure de la chambre de tranquillisation et des alvéoles est constituée par la virole conique et par des parois complémentaires qui renforcent la virole conique. D'autre part, les volets divergents suiveurs sont alimentés par un air de refroidissement pressurisé issu du canal annulaire délimité par la paroi annulaire et le carter.

La chambre de tranquillisation permet de ralentir la vitesse de l'air reçu et d'augmenter la pression de l'air de refroidissement des volets divergents suiveurs.

Les dispositions suivantes sont en outre avantageusement adaptées :
- les volets divergents suiveurs sont caissonnés et refroidis par l'air délivré par les canalisations télescopiques, tandis que les volets divergents commandés sont à simple peau ;
- les volets convergents sont du type simple peau ;
- la paroi conique comporte des ouvertures entre les alvéoles pour permettre la circulation d'un air de nacelle dans l'espace entourant la tuyère convergente divergente ;
- le flux d'air de refroidissement, circulant dans le canal annulaire est divisé en deux flux au moyen d'un anneau fixe solidaire de la paroi frontière, le flux radialement intérieur étant injecté en amont des volets convergents via une fente et le flux radialement extérieur étant injecté dans la chambre de tranquillisation par les perçages ménagés dans la paroi frontière.

Cette dernière disposition permet d'éviter la création des dépressions au niveau des piquages de l'art antérieur et les réintroductions de gaz chauds. Ceci assure, en outre, une homogénéité du refroidissement des volets convergents.

Avantageusement les moyens de refroidissement des volets divergents comportent en outre des moyens pour régler le débit d'air de refroidissement desdits volets.

Les moyens de réglage de débit comportent de préférence un anneau monté mobile dans un tiroir solidaire de la paroi frontière, ledit anneau et ledit tiroir comportant chacun une pluralité de trous de réglage de débit susceptibles d'être mis en correspondance avec les perçages de la paroi frontière par déplacement dudit anneau.

Selon un premier mode de réalisation, l'anneau est monté mobile en rotation autour de l'axe X et est entraîné en rotation par un système pignon crémaillère au moyen d'un actionneur entraînant ledit pignon.

Selon un deuxième mode de réalisation, l'anneau est monté mobile en translation parallèlement à l'axe X et est déplacé par une pluralité de vérins synchronisés.

D'autres avantages et caractéristiques de l'invention ressortiront à la lecture de la description suivante faite à titre d'exemple et en référence aux dessins annexés dans lesquels :
la figure 1 est une vue en coupe d'une tuyère de turboréacteur selon l'invention, la partie supérieure de cette figure étant une coupe dans le plan des volets commandés, la tuyère étant ouverte, et la partie inférieure de cette figure étant une coupe dans le plan des volets suiveurs, la tuyère étant fermée ;
la figure 2 est une demi-coupe, selon le plan médian des volets suiveurs, du collecteur d'air mis en place à l'arrière du carter support de la tuyère et adossé à la virole conique ;
la figure 3 est une demi-coupe, selon le plan médian des volets commandés du collecteur d'air montré sur la figure 3 ;
la figure 4 est une vue en perspective de la virole conique, cette vue étant prise de l'amont ;
la figure 5 est semblable à la figure 3 et montre un premier mode de réalisation de l'anneau de réglage du débit d'air de refroidissement des volets divergents ;
la figure 6 semblable à la figure 5 montre un deuxième mode de réalisation de l'anneau de réglage du débit d'air ;
la figure 7 montre en développé le système d'obturation de la chambre de tranquillisation par l'anneau de commande rotatif de la figure 5, et
la figure 8 montre en développé le système d'obturation de la chambre de tranquillisation par l'anneau de commande coulissant de la figure 6.

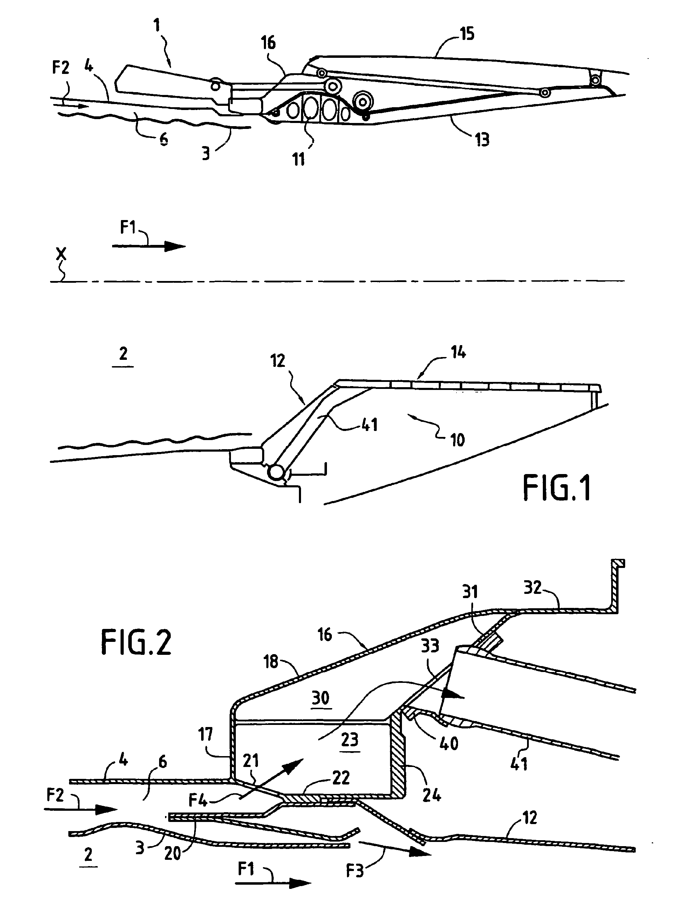

La figure 1 montre l'arrière corps 1 d'un turboréacteur d'aviation à double flux qui comporte une chambre de post-combustion 2 d'axe X dans lequel circule le flux primaire chaud F1.

Cette chambre de post-combustion 2 est délimitée par une paroi annulaire 3 d'axe X disposée radialement à l'intérieur d'un carter 4. La paroi annulaire3 et le carter 4 délimitent entre eux un canal annulaire 6 dans lequel circule un flux secondaire froid F2, servant au refroidissement de la paroi annulaire 3 et d'une tuyère convergente divergente 10 disposée en aval de la chambre de post-combustion 2.

Cette tuyère convergente divergente 10 comporte une première couronne de volets convergents comportant des volets convergents commandés 11, articulés sur l'extrémité aval du carter 4 et alternant circonférentiellement avec des volets convergents suiveurs 12 également articulés sur l'extrémité aval du carter 4, et une deuxième couronne de volets divergents présentant en alternance des volets divergents commandés 13 articulés à l'extrémité aval des volets convergents commandés 11, et des volets divergents suiveurs 14 articulés à l'extrémité aval des volets convergents suiveurs 12, le nombre de volets convergents étant pair et égal au nombre de volets divergents.

Autour de la tuyère 10 sont prévus des volets froids 15 articulés à leur extrémité aval sur une virole conique 16 solidaire de la partie aval du carter 4.

A l'extrémité aval du canal annulaire 6 est prévu un anneau 20 qui partage le flux secondaire froid F2 en un flux radialement intérieur F3 qui débouche par une fente tangentiellement à la paroi interne des volets convergents, de manière à former un film d'air froid entraîné par le flux chaud F1 et lèchant les volets convergents, ces derniers pouvant ainsi être du type simple peau, et en un flux radialement extérieur F4 destiné au refroidissement des volets divergents.

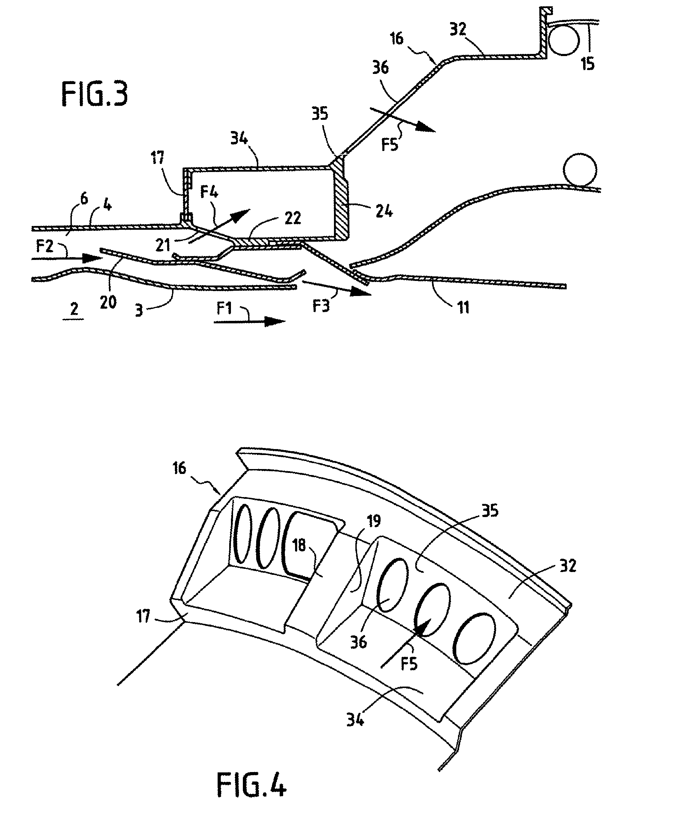

Ainsi que cela est visible sur les figures 2 et 3, le flux F4 pénètre par des ouvertures 21 ménagées dans la paroi d'extrémité 22 du carter 4 située en aval de la virole conique 16, dans une chambre annulaire de tranquillisation 23 d'axe X, délimitée en amont par la partie radialement intérieure 17 de la virole conique 16, et en aval par la structure 24 d'accrochage de la tuyère convergente divergente 10, solidaire du carter 4. La paroi d'extrémité 22, comportant les ouvertures 21, forme la frontière entre le canal annulaire 6 et la chambre de tranquillisation 23.

Tout autour de la chambre de tranquillisation 23 sont prévues une pluralité d'alvéoles 30, chacune disposée dans le plan de symétrie d'un volet convergent suiveur 12 et du volet divergent suiveur 14 articulé sur ledit volet convergent suiveur 12. Chaque alvéole 30 est délimitée en amont par une portion médiane 18 de la virole conique 16, et circonférentiellement par deux parois sensiblement parallèles 19 venues du formage de la virole conique 16, ainsi que cela est visible sur la figure 4. Elle est délimitée en aval par une paroi d'obturation 31 qui relie la structure d'accrochage 24 à la partie supérieure 32 de la virole conique 16, cette paroi d'obturation 31 comportant un orifice 33 dont l'utilisation sera expliquée plus loin dans le présent mémoire.

Entre deux alvéoles consécutives 30, la chambre de tranquillisation 23 est obturée par une paroi sensiblement axiale 34, visible sur la figure 4, qui relie les extrémités radialement intérieure de deux parois 19 adjacentes.

On voit aussi sur les figures 3 et 4 que la virole conique 16 présente en outre une paroi 35, fortement inclinée qui s'étend entre le bord aval de la paroi axiale 34, les bords aval desdites deux parois 19 adjacentes et le bord amont de la partie supérieure 32, entre deux alvéoles 30 adjacentes. Cette paroi 35 présente plusieurs orifices 36 permettant la circulation de l'air de nacelle F5 non pressurisé afin de refroidir les divers dispositifs de commande des volets de la tuyère convergente divergente 10.

L'orifice 33 de chaque alvéole comporte un raccord 40 pour la fixation de l'extrémité amont d'une canalisation ou tube télescopique 41 raccordé au volet divergent suiveur 14 situé dans le même plan axial passant par l'axe X.

Les volets divergents suiveurs 14 sont du type caissonnés et l'intérieur de ces volets 14 reçoit une partie du flux d'air F4 qui est pressurisé. Des orifices appropriés permettent d'évacuer cet air dans le flux F1 et vers la paroi intérieure des volets divergents commandés 13 qui peuvent être avantageusement du type simple peau.

Le flux radialement extérieur F4 est injecté dans la chambre de tranquillisation 23 au travers de la cloison frontière 22 percée. Le flux F4 se divise ensuite en sortant de la chambre 23 entre les différentes alvéoles 30 servant à alimenter les tubes télescopiques 41 puis les volets divergents suiveurs 14. La chambre de tranquillisation 23 permet de faire un prélèvement régulier au niveau de la fin du canal annulaire 6 et d'alimenter les alvéoles 30 avec une pression et un débit uniformes. De la sorte, le film de refroidissement des parois intérieures des volets convergents 11 et 12 n'est pas perturbé même en cas de fort prélèvement de flux F4.

En outre, la forme donnée à la virole conique 16 ainsi que cela est visible sur la figure 4, permet de réaliser le circuit de refroidissement des volets divergents 13, 14 sans encombrement excessif et permet de rigidifier cette virole conique 16, grâce aux cloisons 19 délimitant les alvéoles 30 et aux parois 35.

De manière avantageuse, il est en outre prévu un dispositif 50 pour contrôler de manière progressive le débit F4 injecté au niveau des volets divergents suiveurs 14. Ce dispositif 50 comporte un anneau commandé 51 permettant d'obturer l'entrée de la chambre de tranquillisation 23 selon les conditions de vol. L'obturation n'a pas besoin d'être d'une grande étanchéité, car le but est de réduire de manière appréciable le débit de refroidissement F4, qui est coûteux pour la performance dans certaines conditions de fonctionnement du moteur. A l'inverse, dans certains cas, on souhaitera refroidir la tuyère avec un fort débit afin d'obtenir la température la plus basse possible sur les volets, pour diminuer la signature infra-rouge par exemple, quitte à perdre un peu sur la performance du moteur.

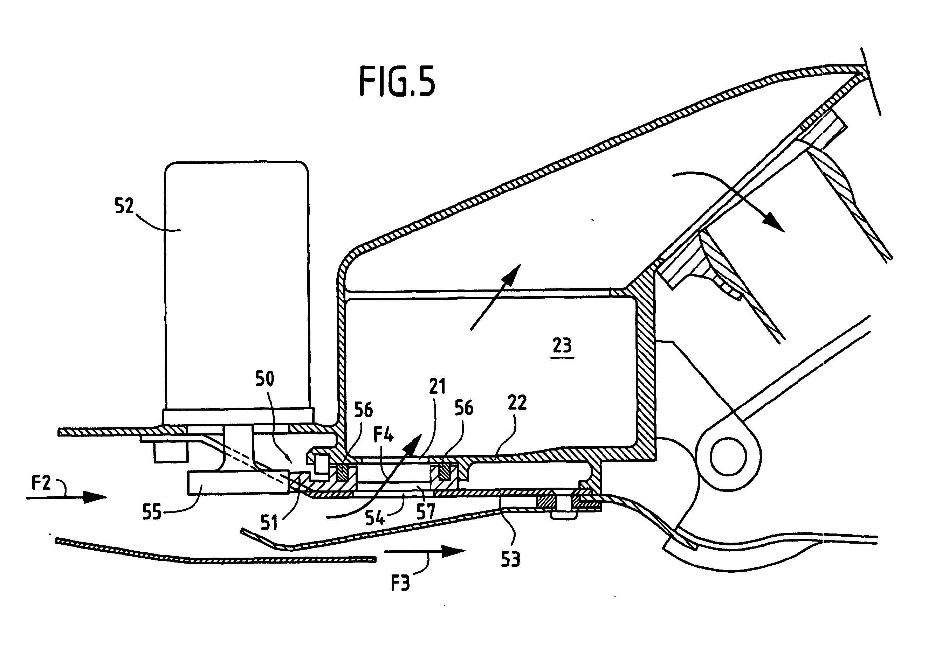

La figure 5 montre un premier mode de réalisation du dispositif 50. L'anneau 51 est monté rotatif autour de l'axe X et sa position est réglée par un actionneur 52. L'anneau 51 est situé radialement à l'intérieur de la cloison frontière 22 en regard des ouvertures 21. Sur sa face inférieure, l'anneau 51 est maintenu en place par une autre cloison fixe 53 dans laquelle sont pratiquées des ouvertures 54 en regard des ouvertures 21. Un pignon 55 monté sur la tige de l'actionneur 52 entraîne l'anneau 51 en rotation par le biais d'une crémaillère solidaire de l'anneau 51. Des segments d'étanchéité 56 limitent les fuites entre l'anneau 51 et la chambre de tranquillisation 23 lorsque celui-ci est fermé.

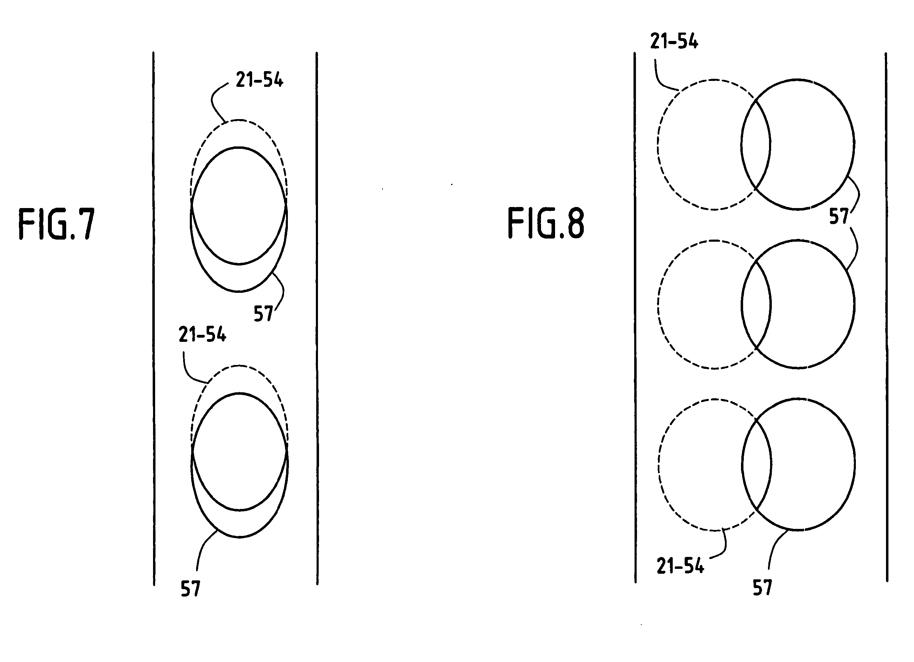

L'anneau 51 présente également des ouvertures 57 qui, dans la position de débit maximum, se trouvent alignées avec les ouvertures 21 et 54. Lors de la rotation de l'anneau 51 autour de l'axe X, les ouvertures 57 se décalent circonférentiellement par rapport aux ouvertures 21 et 54, ainsi que cela est montré sur la figure 7, entre la position d'ouverture maximale et une position d'obturation totale, dans laquelle il n'y a pratiquement plus de débit, hormis les fuites. Il est ainsi possible de doser le débit de manière continue.

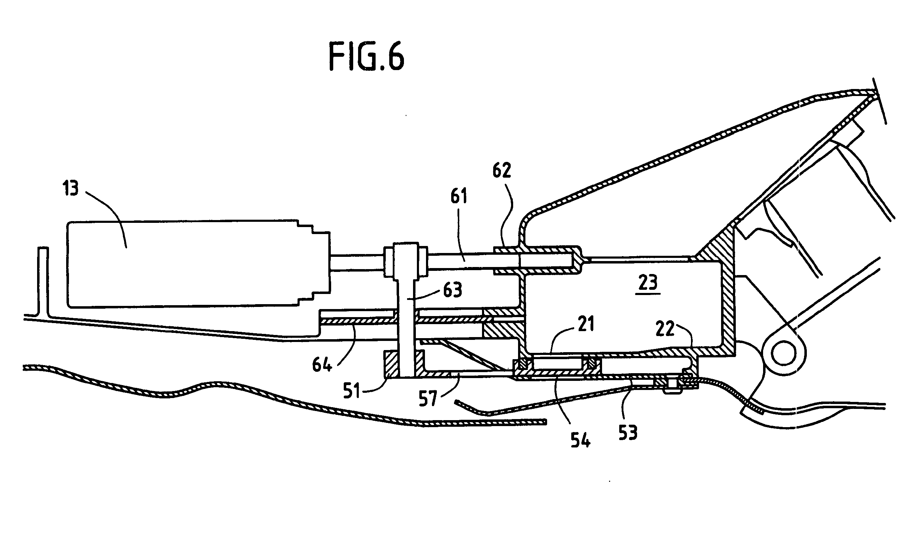

La figure 6 montre un deuxième mode de réalisation du dispositif 50 qui comporte également un anneau 51 présentant des ouvertures 57 susceptibles d'être disposées en face des ouvertures 21 de la paroi frontière 22 et des ouvertures 54 d'une cloison fixe 53 solidaire de l'extrémité aval du carter 4. Au lieu d'être monté rotatif autour de l'axe X, l'anneau est susceptible d'être déplacé parallèlement à l'axe X au moyen d'une pluralité de vérins 60 synchronisés, par exemple trois vérins, dont les axes 61 coulissent dans des guides 62. La liaison entre les axes 61 et l'anneau se fait au moyen de tiges 63 traversant le carter 4 par des passages étanches 64.

Dans la position de débit maximum, les ouvertures 57 sont disposées en regard des ouvertures 21 et 54 et le système est débitant. Dans une autre position de l'anneau 51, montrée sur la figure 6, les ouvertures 21 et 54 sont obturées par l'anneau 51 et il n'y a pratiquement pas de débit, hormis les débits de fuites. Pour une position intermédiaire montrée sur la figure 8, il est possible de doser le débit d'air de manière continue.

Dans les deux modes de réalisation du dispositif 50, les étanchéités entre l'anneau 51 et les parties fixes peuvent être assurées par des segments, pour retarder une usure rapide des joints.

Le dispositif 50 offre la possibilité de réguler le débit prélevé dans une certaine gamme pour l'adapter aux conditions de fonctionnement du moteur et aux circonstances opérationnelles.

## Revendications

1. Turboréacteur à double flux comportant une chambre de post-combustion (2) d'axe X délimitée par une paroi annulaire (3) située radialement à l'intérieur d'un carter annulaire (4), ladite paroi annulaire et ledit carter définissant un passage annulaire (6) dans iequei circule un flux d'air de refroidissement (F2), une tuyère axisymétrique (10) convergente divergente disposée en aval de ladite chambre de post-combustion (2) et comportant une couronne de volets convergents (11, 12) articulés à l'extrémité aval dudit carter (4) et une couronne de volets divergents (13, 14) articulés à l'extrémité aval desdits volets convergents (11, 12), chaque couronne de volets comportant en alternance une pluralité de volets commandés (11, 13) et une pluralité de volets suiveurs (12, 14), une couronne de volets froids (15) disposés radialement à l'extérieur de ladite tuyère (10) et articulés à leur extrémité amont sur une virole conique (16) raccordée à la partie aval dudit carter (4), des moyens pour créer un film d'air de refroidissement sur les faces internes desdits volets convergents (11, 12) et des moyens de refroidissement desdits volets divergents (13, 14), **caractérisé par le fait que** les moyens de refroidissement desdits volets divergents (13, 14) comportent :
une chambre de tranquillisation (23) annulaire délimitée en aval par ladite virole conique (16) et alimentée en air de refroidissement par des perçages (21) ménagés dans une paroi frontière (22) entre ladite chambre de tranquillisation (23) et l'extrémité aval dudit passage annulaire (6),
une pluralité d'alvéoles de distribution (30) entourant la chambre de tranquillisation (23) et raccordées à cette dernière, lesdites alvéoles (30) étant délimitées en aval par ladite virole conique (16) et étant disposées autour de l'axe X dans les plans de symétrie des volets suiveurs (12, 14), et
des canalisations télescopiques (41) raccordant chacune une alvéole (30) au volet divergent suiveur (14) situé dans le même plan de symétrie que ladite alvéole (30).

2. Turboréacteur selon la revendication 1, **caractérisé par le fait que** les volets divergents suiveurs (14) sont caissonnés et refroidis par l'air délivré par les canalisations télescopiques (41) tandis que les volets divergents commandés (13) sont à simple peau.

3. Turboréacteur selon l'une des revendications 1 ou 2, **caractérisé par le fait que** les volets convergents (11, 12) sont du type simple peau.

4. Turboréacteur selon l'une quelconque des revendications 1 à 3, **caractérisé par le fait que** la paroi conique (16) comporte des ouvertures entre les alvéoles pour permettre la circulation d'un air de nacelle dans l'espace entourant la tuyère convergente divergente.

5. Turboréacteur selon l'une quelconque des revendications 1 à 4, **caractérisé par le fait que** le flux d'air de refroidissement (F2) circulant dans le canal annulaire (6) est divisé en deux flux au moyen d'un anneau fixe (20) solidaire de la paroi frontière (22), le flux radialement intérieur (F3) étant injecté en amont des volets convergents (11, 12) via une fente et le flux radialement extérieur (F4) étant injecté dans la chambre de tranquillisation (23) par les perçages (21) de la paroi frontière (22).

6. Turboréacteur selon la revendication 5, **caractérisé par le fait que** les moyens de refroidissement des volets divergents (13, 14) comportent en outre des moyens (50) pour régler le débit d'air de refroidissement (F4) desdits volets.

7. Turboréacteur selon la revendication 6, **caractérisé par le fait que** les moyens de réglage de débit (50) comportent un anneau (51) monté mobile dans un tiroir (53) solidaire de la paroi frontière (22), ledit anneau (51) et ledit tiroir (53) comportant chacun une pluralité de trous de réglage (54, 57) de débit susceptibles d'être mis en correspondance avec les perçages (21) de la paroi frontière (22) par déplacement dudit anneau (51).

8. Turboréacteur selon la revendication 7, **caractérisé par le fait que** l'anneau (51) est monté mobile en rotation autour de l'axe X et est entraîné en rotation par un système pignon (55) crémaillère au moyen d'un actionneur (52) entraînant ledit pignon (55).

9. Turboréacteur selon la revendication 7, **caractérisé par le fait que** l'anneau (51) est monté mobile en translation parallèlement à l'axe X et est déplacé par une pluralité de vérins synchronisés (60).

## Claims

1. A bypass turbojet comprising an afterburn chamber (2) of axis X delimited by an annular wall (3) situated radially inside an annular casing (4), said annular wall and said casing defining an annular passage (6) through which circulates a stream of cooling air (F2), a convergent divergent axisymmetric nozzle (10) arranged downstream of said afterburn chamber (2) and comprising a circle of convergent flaps (11, 12) hinged at the downstream end of said casing (4) and a circle of divergent flaps (13, 14) hinged at the downstream end of said convergent flaps (11, 12), each circle of flaps comprising alternately a plurality of controlled flaps (11, 13), and a plurality of follower flaps (12, 14), a circle of cold flaps (15) arranged radially outside said nozzle (10) and hinged at their upstream end to a conical shell (16) linked to the downstream part of said casing (4), means for creating a film of cooling air on the internal faces of said convergent flaps (11, 12) and means of cooling said divergent flaps (13, 14), **characterised by** the fact that the means of cooling said divergent flaps (13, 14) comprise:
an annular plenum chamber (23) delimited downstream by said conical shell (16) and fed with cooling air through drillings (21) made in a boundary wall (22) between said plenum chamber (23) and the downstream end of said annular passage (6),
a plurality of distribution cells (30) surrounding the plenum chamber (23) and linked to the latter, said cells (30) being delimited downstream by said conical shell (16) and being arranged around the X axis in the planes of symmetry of the follower flaps (12, 14), and
telescopic pipelines (41) each linking a cell (30) to the follower divergent flap (14) situated in the same plane of symmetry as said cell (30).

2. The turbojet according to claim 1, **characterised by** the fact that the follower divergent flaps (14) are partitioned and cooled by the air delivered by the telescopic pipelines (41) while the controlled divergent flaps (13) have a single skin.

3. The turbojet according to claim 1 or claim 2, **characterised by** the fact that the convergent flaps (11, 12) are of the single skin type.

4. The turbojet according to any one of claims 1 to 3, **characterised by** the fact that the conical wall (16) comprises openings between the cells to allow the circulation of a nacelle air in the space surrounding the convergent divergent nozzle.

5. The turbojet according to any one of claims 1 to 4, **characterised by** the fact that the stream of cooling air (F2) circulating through the annular duct (6) is divided into two streams by means of a stationary ring (20) integral with the boundary wall (22), the radially inner stream (F3) being injected upstream of the convergent flaps (11, 12) via a slot and the radially outer stream (F4) being injected into the plenum chamber (23) through the drillings (21) of the boundary wall (22).

6. The turbojet according to claim 5, **characterised by** the fact that the means for cooling the divergent flaps (13, 14) furthermore comprise means (50) for adjusting the flow rate of cooling air (F4) for said flaps.

7. The turbojet according to claim 6, **characterised by** the fact that the flow rate adjustment means (50) comprise a ring (51) mounted movably in a slide (53) integral with the boundary wall (22), said ring (51) and said slide (53) each comprising a plurality of flow rate adjustment holes (54, 57) capable of being matched up with the drillings (21) of the boundary wall (22) by displacement of said ring (51).

8. The turbojet according to claim 7, **characterised by** the fact that the ring (51) is mounted movably in rotation about the X axis and is driven in rotation by a rack and pinion system (55) by means of an actuator (52) driving said pinion (55).

9. The turbojet according to claim 7, **characterised by** the fact that the ring (51) is mounted movably in translation parallel to the X axis and is displaced by a plurality of synchronized jacks (60).

## Patentansprüche

1. Zweistrom-Turbostrahltriebwerk umfassend eine Nachverbrennungskammer (2) mit der Achse X, die durch eine radial innerhalb eines ringförmigen Gehäuses (4) gelegene ringförmige Wand (3) begrenzt ist, wobei die ringförmige Wand und das Gehäuse einen ringförmigen Durchgang (6) definieren, in dem ein Kühlluftstrom (F2) zirkuliert, eine axialsymmetrische konvergent-divergente Düse (10), die stromabwärts der Nachverbrennungskammer (2) angeordnet ist und die einen Kranz konvergenter Klappen (11, 12), welche an dem stromabwärtigen Ende des Gehäuses (4) angelenkt sind, sowie einen Kranz divergenter Klappen (13, 14), welche an dem stromabwärtigen Ende der konvergenten Klappen (11, 12) angelenkt sind, umfaßt, wobei jeder Klappenkranz abwechselnd eine Vielzahl gesteuerter Klappen (11, 13) und eine Vielzahl von Folgeklappen (12, 14) umfaßt, einen Kranz kalter Klappen (15), die radial außerhalb der Düse (10) angeordnet und an ihrem stromaufwärtigen Ende an einen mit dem stromabwärtigen Teil des Gehäuses (4) verbundenen konischen Ring (16) angelenkt sind, Mittel zur Erzeugung eines Kühlluftfilms an den Innenseiten der konvergenten Klappen (11, 12) sowie Mittel zum Kühlen der divergenten Klappen (13, 14), **dadurch gekennzeichnet, daß** die Mittel zum Kühlen der divergenten Klappen (13, 14) folgendes umfassen:
eine ringförmige Beruhigungskammer (23), die stromabwärts durch den konischen Ring (16) begrenzt ist und die über Bohrungen (21), welche in einer Grenzwand (22) zwischen der Beruhigungskammer (23) und dem stromabwärtigen Ende des ringförmigen Durchgangs (6) ausgebildet sind, mit Kühlluft versorgt wird,
eine Vielzahl von Verteilerzellen (30), welche die Beruhigungskammer (23) umgeben und mit letzterer verbunden sind, wobei die Zellen (30) stromabwärts durch den konischen Ring (16) begrenzt sind und um die Achse X in den Symmetrieebenen der Folgeklappen (12, 14) angeordnet sind, sowie
Teleskoprohrleitungen (41), die jeweils eine Zelle (30) mit der in der gleichen Symmetrieebene wie die Zelle (30) gelegenen divergenten Folgeklappe (14) verbinden.

2. Turbostrahltriebwerk nach Anspruch 1, **dadurch gekennzeichnet, daß** die divergenten Folgeklappen (14) kastenförmig sind und durch die über die Teleskoprohrleitungen (41) gelieferte Luft gekühlt werden, während die divergenten gesteuerten Klappen (13) einschalig sind.

3. Turbostrahltriebwerk nach einem der Ansprüche 1 oder 2, **dadurch gekennzeichnet, daß** die konvergenten Klappen (11, 12) einschaliger Art sind.

4. Turbostrahltriebwerk nach irgendeinem der Ansprüche 1 bis 3, **dadurch gekennzeichnet, daß** die konische Wand (16) Öffnungen zwischen den Zellen aufweist, um das Zirkulieren einer Gondelluft in dem die konvergent-divergente Düse umgebenden Raum zu ermöglichen.

5. Turbostrahltriebwerk nach irgendeinem der Ansprüche 1 bis 4, **dadurch gekennzeichnet, daß** der in dem ringförmigen Kanal (6) zirkulierende Kühlluftstrom (F2) mittels eines festen Rings (20), der mit der Grenzwand (22) fest verbunden ist, in zwei Ströme aufgeteilt wird, wobei der radial innere Strom (F3) stromaufwärts der konvergenten Klappen (11, 12) über einen Schlitz eingeleitet wird und der radial äußere Strom (F4) über die Bohrungen (21) der Grenzwand (22) in die Beruhigungskammer (23) eingeleitet wird.

6. Turbostrahltriebwerk nach Anspruch 5, **dadurch gekennzeichnet, daß** die Mittel zum Kühlen der divergenten Klappen (13, 14) ferner Mittel (50) zum Einstellen der Kühlluftmenge (F4) der Klappen umfassen.

7. Turbostrahltriebwerk nach Anspruch 6, **dadurch gekennzeichnet, daß** die Mengeneinstellmittel (50) einen Ring (51) umfassen, der in einem mit der Grenzwand (22) fest verbundenen Schieber (53) beweglich angebracht ist, wobei der Ring (51) und der Schieber (53) jeweils eine Vielzahl von Mengeneinstellöchern (54, 57) aufweisen, die geeignet sind, durch Bewegen des Rings (51) mit den Bohrungen (21) der Grenzwand (22) in Deckung gebracht zu werden.

8. Turbostrahltriebwerk nach Anspruch 7, **dadurch gekennzeichnet, daß** der Ring (51) um die Achse X drehbeweglich angebracht ist und durch ein Ritzel (55)-Zahnstangen-System, mittels eines das Ritzel (55) antreibenden Aktuators (52) drehangetrieben wird.

9. Turbostrahltriebwerk nach Anspruch 7, **dadurch gekennzeichnet, daß** der Ring (51) parallel zur Achse X verschiebebeweglich angebracht ist und durch eine Vielzahl synchronisierter Zylinder (60) bewegt wird.
